# EUROPEAN PATENT SPECIFICATION

(11) **EP 3 801 363 B1**
(45) Date of publication and mention of the grant of the patent: **04.09.2024**
(21) Application number: 19803609.7
(22) Date of filing: 11.03.2019
(51) Int. Cl.: A61C 7/16, A61C 5/00, A61C 7/28

(54) **ORTHODONTIC ANCHORAGE ASSEMBLY**
KIEFERORTHOPÄDISCHE VERANKERUNGSANORDNUNG
ENSEMBLE D'ANCRAGE ORTHODONTIQUE

(30) Priority: 14.05.2018 AU 2018901655
(43) Date of publication of application: 14.04.2021
(73) Proprietor: Erskine Holdco Pty Ltd., North Curl, Curl 2099 (AU)
(72) Inventor: ERSKINE-SMITH, Craig Mathew, Curl, New South Wales 2099 (AU)
(74) Representative: Grünecker Patent- und Rechtsanwälte PartG mbB
(86) International application number: PCT/AU2019/050217
(87) International publication number: WO 2019/217991

(56) References cited:
- EP-A1- 0 381 871
- EP-B1- 1 539 021
- DE-A1- 102016 011 720
- DE-A1- 102016 108 630
- FR-B1- 2 992 545
- US-A1- 2005 074 716
- US-A1- 2010 239 992
- US-A1- 2010 239 992
- US-A1- 2017 112 596

## Description

### FIELD

The present invention relates to an orthodontic splint and an orthodontic anchorage assembly.

### BACKGROUND

Orthodontics traditionally and usually involve the treatment of either all the teeth in the mouth or all the teeth in one arch (maxillary or mandibular). There has been an increasing trend in recent decades for cosmetically motivated treatment of only the anterior teeth - especially those primarily visible in the smile, which are often the maxillary teeth.

Quite often enamel is removed from between teeth in the anterior or pre molar segments in order to make space. This space created is repositioned and used to allow for the realignment of crooked or malaligned anterior teeth. This stripped and removed enamel is precious, limited and non-renewable. However, when the molar teeth are used as anchorage units and used to apply forces to accelerate treatment it is quite common for these molar teeth to tilt quickly to the mesial instead of moving slowly forward in an ordinary fashion. Any gaps created by enamel stripping are wasted by this tipping and tilting. The rapid tilting and often rotating of these teeth indicates a failure of anchorage caused by traditional devices. Typically, more enamel needs to be stripped later on in treatment to provide sufficient space to achieve the realignment of the anterior teeth. Quite often the maximum amount of enamel has already been taken at the initial set up and there is no more available. Even if there is more available, there are negative effects on the tooth and sometimes negative effects on the periodontal health of the teeth involved where the roots are too close together due to excess stripping.

Conventional orthodontics utilises metallic brackets and wires adhered to the surfaces of the molars and premolars. These conventional orthodontic brackets or bands do not function well for orthodontic anchorage because, in part, they do not restrict the movement of the wire attached to them, or the movement of the molars as successfully or precisely as larger diameter tubes or bars rigidly fixed or cemented to the teeth. For example, EP 0 381 871 A1 discloses a wire attached to a row of teeth by adhesive filled in perforations of a mould. US 2010/239992 A1 discloses attachment of a wire, wherein a mould is used which has reservoirs which are filled with attachment material for attaching the wire to the teeth. DE 10 2016 108 630 A1 discloses an orthodontic splint having hooks, and made of an elastic material. EP 1 539 021 B1 discloses a lingual retainer having a bendable bow which can be attached to teeth at respective ends.

Conventional braces and wires do not provide an optimal solution for high level anchorage at any time, or immediate molar anchorage or for rapid cosmetic 6 month treatment or for cases that have significant enamel stripping or require the use of the molars to pull other teeth to the distal or for enhanced rotations or for reduced treatment time.

Plastic aligner trays are typically even worse at creating anchorage in the molars. They do not join the molars together in a rigid way, and even with the use of attachments these teeth can move, swivel and tilt to the mesial quite easily inside the aligner (up to a point, and depending on attachments).

An anchorage splinting device prevents the tilting of individual teeth, so that when forces are applied to make it go to the mesial, it drags slowly through the bone in a parallel bodily fashion rather than just allowing two separated teeth to tilt easily. For immediate anchorage devices it is common and known to use "temporary anchorage devices" (TAD's). One disadvantage of TAD's is that they require local anaesthetic and surgery, including drilling the bone or inserting a small screw through the gum into the bone. This runs the risk of hitting the root of a tooth and the possible loss or damage or ankylosis of a tooth if the surgical technique is not good. TAD's can also come loose and fall out. TAD' are typically put in between the roots of teeth. The surgical technique is skilled and demanding, and general practitioners are reluctant to take on these cases. Although TAD's work well as anchors, they are not commonly used by general dentists because of the surgical aspects and the risk involved.

Disclosed in International Patent Application PCT/AU2016/000250 is an orthodontic molar/pre molar splinting device where there are two adhesive pads attached at either end of connector bar.

The splinting device fixes two adjacent molars together to increase the anchorage value of the two adjacent teeth. A disadvantage of this orthodontic splinting device is that it is typically applied prior to the impression of the mouth and/or prior to the scanning of the teeth and prior to the aligner trays being constructed. These aligner or attachment trays need to be constructed in such a way as to go over and around the splinting devices so that they will fit to and engage the molars so that the molars can be used as a base from which to deliver forces onto the anterior teeth. If the base is solid and stable, then the target teeth move much more effectively and rapidly.

A disadvantage of the splitting device above is that the operator must carry supplies of the brackets or splints that adhere to the tooth, and then cement these on separately. In the case of brackets, the operator must then fit a tube which then is cemented to the metal, ceramic, plastic or fibre reinforced polymer brackets.

It is known to form projections of composite resins - typically on the buccal or lingual surfaces - which are referred to as attachments - using a more flexible and adaptable 'attachment' plastic tray, that is applied to the patient's teeth, with the tray having moulded cavities into which there is injected a flowable or putty like material that is caused to set and harden so as to adhere to the patient's teeth. The projections are primarily designed to hold aligners down in position so that they don't drift off the teeth to which they are to be applied. They are not designed for molar anchorage to resist mesial tipping.

A disadvantage of the current technique of treatment using clear aligner trays and simple buccal or lingual attachments is that the fit between the aligner and the attachment is sufficiently imprecise and 'sloppy' so as to allow significant mesial movement of the molars.

### OBJECT

It is the object of the present invention to overcome or substantially ameliorate at least one of the above disadvantages.

### SUMMARY OF INVENTION

Above object is achieved by a unitary orthodontic splint according to claim 1.
There is disclosed herein an orthodontic mould to be applied to one or more of a patient's teeth, the mould having at least one cavity configured to be positioned adjacent a respective tooth of the patient, with the at least one cavity to receive a settable material to provide a projection, the projection to be fixed to a respective one of the teeth; and a rod or stint mounted in the mould and extending from the at least one cavity so as to be secured to the projection when the settable material is set.

Preferably, the mould includes a first cavity and a second cavity, wherein each cavity is configured to be positioned adjacent a respective tooth of the patient.

Preferably, said predetermined direction is generally parallel to said axis.

In an alternative preferred form, said predetermined direction includes a component generally transverse of said axis.

There is still further disclosed herein an orthodontic splint formed of rigid material so as to resist deformation, and to be fixed to a pair of adjacent teeth so as to extend therebetween, the splint being longitudinally elongated so as to have a longitudinal axis and longitudinally spaced end portions, each end portion being provided to be attached to a respective one of the teeth by a settable substance, and wherein the splint further includes an elongated main body extending generally longitudinally parallel to said axis, and a projection extending from said body providing for attachment to the splint of a tensioning member such as elastic bands, chain or thread to extend to a further tooth.

Preferably, the projection is a hook so as to provide a recess between the hook and the body.

### BRIEF DESCRIPTION OF DRAWINGS

Preferred forms of the present invention will now be described by way of example with reference to the accompanying drawings wherein;
Figure 1 is a schematic plan view of a patient's teeth and a mould applied thereto;
Figure 2 is a schematic sectioned side elevation of the mould of Figure 1;
Figure 3 is a schematic front elevation of a pair of teeth to which an orthodontic device has been applied by the mould of Figure 1;
Figure 4 is a schematic plan view of a number of rods in isolation not according to the invention employable in the mould of Figures 1 to 3.
Figures 5(A) to 5 (D) are schematic side elevations of modifications of the rods shown in Figure 4 according to the invention;
Figure 6 is a schematic side elevation of a modification of the rods shown in Figure 4;
Figure 7 is a schematic isometric view of a mould and splint rod mounted therein;
Figure 8 is a schematic plan view of adjacent teeth to which a splint rod is applied, with an associated mould at least partly encompassing the teeth;
Figure 9 is a schematic elevation of a further splint rod;
Figure 10 is a schematic isometric view of the splint rod of Figure 9;
Figure 11 is a further schematic isometric view of the split rod of Figure 9;
Figure 12 is a further isometric view of the splint rod of Figure 9;
Figure 13 is a further isometric view of the splint rod of Figure 9;
Figure 14 is a schematic side elevation of a modification of the splint rod of Figure 9;
Figure 15 is a schematic isometric view of the splint rod of Figure 14;
Figure 16 is a schematic isometric view of the splint rod of Figure 14;
Figure 17 is a schematic side elevation of a modification of the splint rod of Figure 14 in isolation not according to the invention;
Figure 18 is a schematic side elevation of a modification of the rods shown in Figure 4; and
Figure 19 is a schematic perspective view of a mould shown in Figure 18.

### DESCRIPTION OF EMBODIMENTS

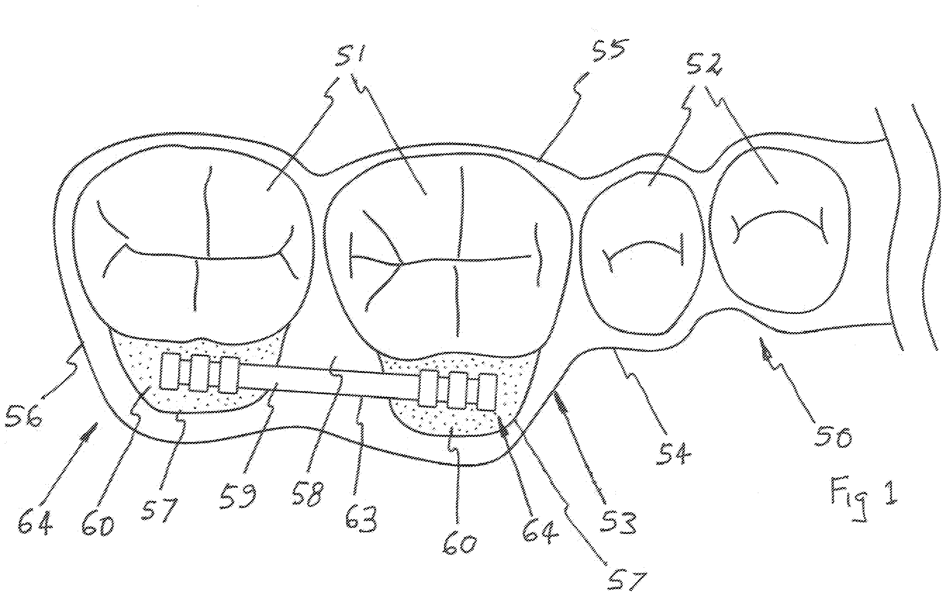

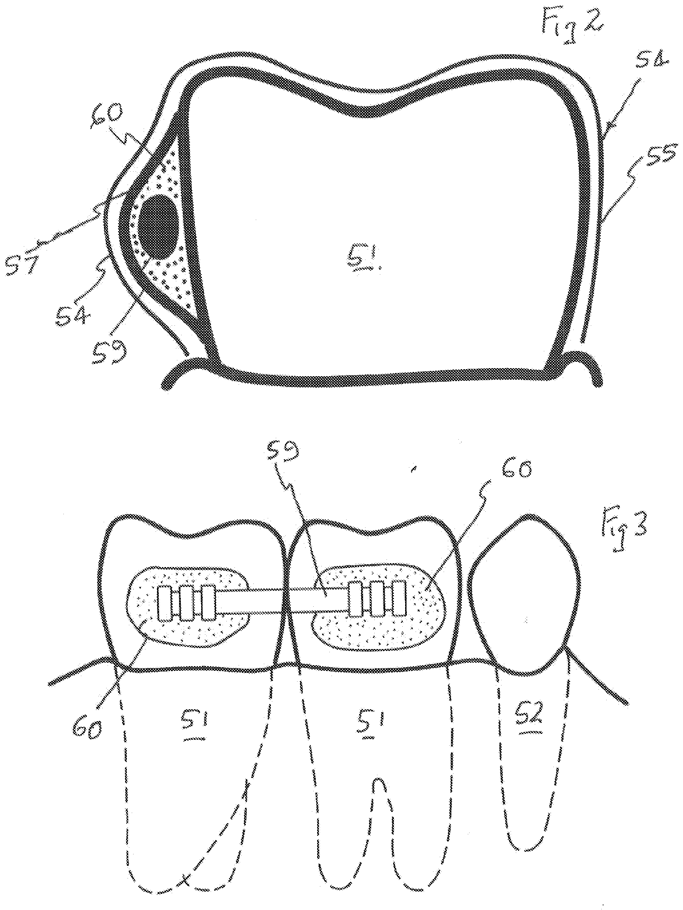

In Figures 1 to 5, there is schematically depicted an orthodontic assembly 50. The assembly 50 is applied to adjacent teeth 51 and 52 of a patient.

The assembly 50 includes a flexible mould (tray) 53 that is applied to the teeth 51 and 52 so as to be resiliently urged into engagement therewith. In that regard, the mould 53 is flexible but is resilient so as to be deformable, so that once deformed the mould 53 is urged into contact with the teeth 51 and 52.

The mould 53 includes a front wall 54 and a rear wall 55 that are joined by an end wall or walls 56. The mould 53 provides a space within which the teeth 51 and 52 are located, while also providing a pair of cavities 57.

Each of the cavities 57 is located between the mould 53 and a respective one of the teeth 51. In this embodiment, each of the cavities 57 is located between the front wall 54, and a respective one of the teeth 51. That is the front wall 54 at least partly encloses the cavities 57.

Extending from the front wall 54 and towards the teeth 51 is a dividing wall 58 that separates the cavities 57. Preferably the dividing wall joins the front wall 54 with the rear wall 55.

Mounted in the wall 58 is a rod 59 that is relatively rigid so as to resist deformation. The rod 59 may be solid or tubular.

In one preferred form, the wall 58 has a passage, or channel, 63 into which the rod 59 is inserted to be mounted in the mould 53. Preferably, the passage 63 has a cross-sectional area so that the dividing wall 58 is urged into contact with the rod 59 to retain the rod 59 in a desired position relative to the mould 53.

In an alternative preferred form, the dividing wall 58 is provided with a slot or passage 63 within which the rod 59 is snap engaged to be secured to the mould 53 and retained with respect thereto in a desired position and orientation. As an example, the wall 58 may have an undercut 86 to provide for the snap engagement.

When the mould 53 together with the rod 59 mounted therein is applied to the teeth 51 and 52, the cavities 57 are formed. The cavities 57 are closed by the surfaces 62 of the patient's teeth 51. Thereafter, a dental practitioner injects into the cavities 57 a flowable substance that sets and hardens so as to provide projections 60 fixed to the teeth 51. Alternatively, the flowable substance may be inserted within the mould 53 prior to application to the teeth 51.

The substance once set in the cavities provides two attachment pads 64. In particular, each tooth 51 has a respective projection 60 secured thereto. When the flowable substance sets and hardens, the rod 59 is fixed to the teeth 51. The mould 53 can be removed leaving the projections 60 and rod 59 fixed to the teeth 51 so that the projections 60 and rod 59 secure the teeth 51 together to provide a stable anchorage to which other devices may be secured.

Preferably, the rod 59 has end irregularities that aid in engaging the projections 60 so as to prevent relative movement between the rod 59 and a projection 60.

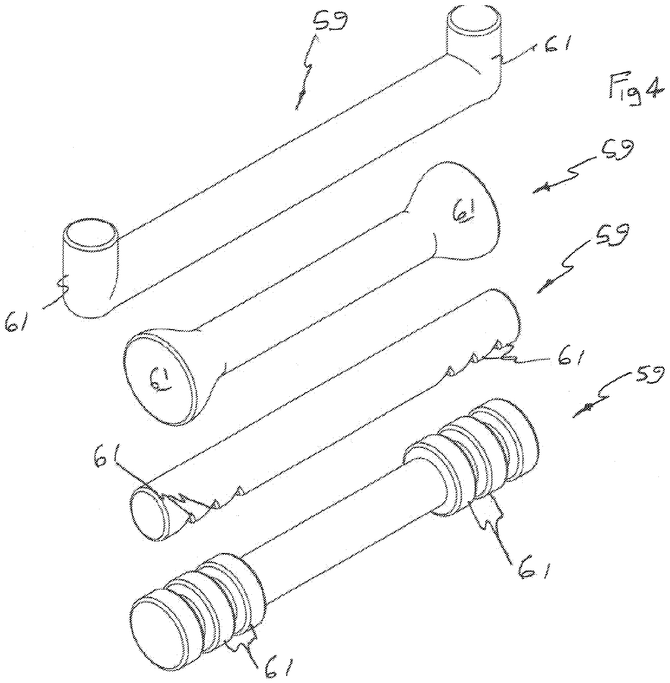

As best seen in Figure 4, the rod 59 can have a variety of end deformations 61 that aid in securing the rod 59 to the projections 60. The rod 59 may be metal wire or may be a fibre glass rod or other suitable material.

The slot or passage 63 may not be formed exactly to the shape of a straight rod 59 but allows enough clearance between the two attachment pads to accommodate any size rod 59 and any deviations and bends or offsets that may be formed within the rod 59 or tube so as to accommodate molars with severe positional discrepancies and/or malalignments in the buccolingual, or occlusal - gingival direction, all with severe malalignments with respect to their long axis - such as when a second molar has been extracted and a third molar grows into the space but at a substantially tilt relative to the first molar. By allowing a large volume in the slot or passage 63 between the two pads 64 the operator can bend and shape a rod 59 or can have a ceramic splinting rod 59 premade to the desirable offset bend or angular bend and not have any concerns about the overlying attachment tray impeding or interfering with the optimal positioning of this rod 59 such that it is in the centre of the adhesive that form the attachments to the buccal or lingual surfaces of the molars or premolars. If the operator uses a very thick and sticky posterior composite resin in the two attachment pads 64 on the two adjacent molars and/or premolars, for example, and then embeds the splinting rod 59 into this thick putty like substance then the putty like substance will hold the rod 59 in position against the forces of gravity and allow convenient and easy delivery of the rod 59 and the substance to the mouth and without having to locate or retain this rod 59 or tube without needing or having to use any snap in feature within the plastic attachment mould 53 which may have otherwise been used to locate and fixate a standard straight splinting rod 59. The operator's only task would be to trim a splinting rod 59 to size such that it fits in between the two large composite molar pads 64 and to make sure it does not inhibit the mould 53 from fully seating in the mouth. It would be difficult to preprogram in a computer and then to create matching physical splinting rod 59 in all the various angles and offsets that may be needed between two molars, and thus, by allowing a significant airspace between the two buccal pads 64 an infinite number of shapes, thicknesses angular bends and offset bends can be accommodated in the splinting rod 59 in the zone between the two adhesive molar/premolar pads 64, thus giving the operator infinite flexibility to bend and distort the rod 59 and still enjoy the benefits of the ease of delivery and the convenience of having the plastic mould 53 premade by a laboratory or orthodontic company and into which they can simply inject some composite resin substance and then place into that the splinting rod 59 , then add a small film of composite resin over that for adhesion to the enamel, and simply insert that complex into the mouth and allow or cause the material to cure - whether by light or self curing modes.

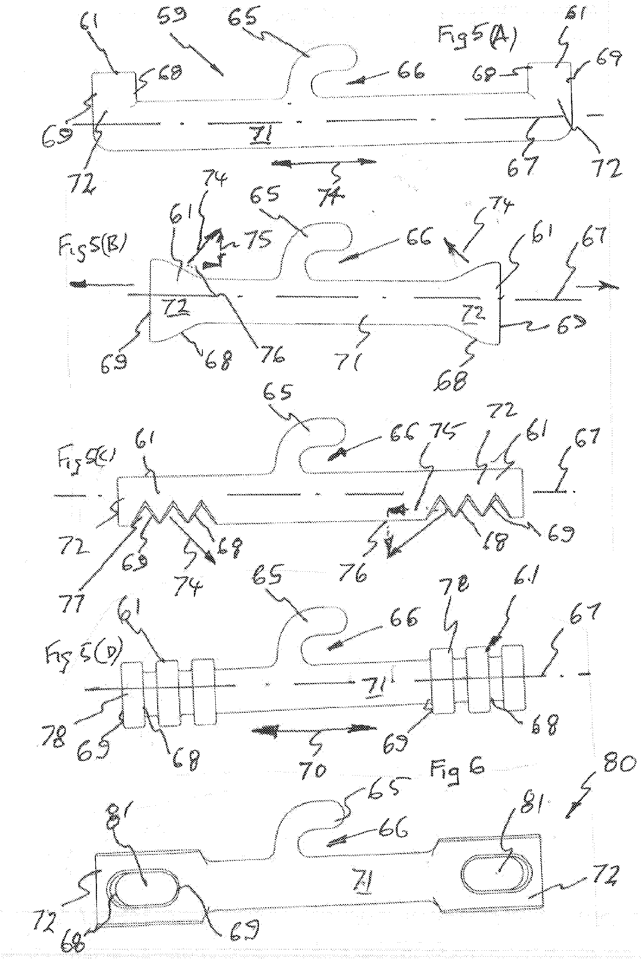

In the embodiments of Figure 5, each of the rods, tubes or splints 59 is provided with a projection 65 that is preferably in the form of a "hook" so as to provide a recess 66 that can receive a tension member, such as a wire or elastic member to extend to a further tooth, for the purposes of applying a force to that further tooth.

As can be seen in Figure 4, but will be described with reference to Figure 5, each of the rods 59 has a longitudinal axis 67. Each end portion 61 has at least one surface 68 or 69 that faces in the direction of a longitudinal axis 67. The surfaces 68 of each rod 69 face toward each other, while the surfaces 69 face in opposite directions away from each other.

In respect of the embodiment where the surfaces 68 and 69 are inclined by an acute angle to the axis 67, each of the surfaces 68 and 69 faces in a predetermined direction having a direction component parallel to the axis 67 and a direction component perpendicular to the axis 67.

Accordingly, the surfaces 68 and 69 are at least partly transversely relative to the longitudinal axes 67.

The surfaces 68 and 69 are engaged by the attachment pads 64 to inhibit relative movement between the rod 59 and the associated tooth 51.

With reference to the embodiment of Figure 5 a, the splint rod 59 includes a central longitudinally extending body 71 extending between end portions 72 that are projections extending generally transverse relative to the longitudinal axis 67. The surfaces 68 and 69 face in the predetermined direction 74. The projections 72 also provide for resistance to angular movement between the projections 60 about axis 67.

The projections (hooks) 65 extend from the body 71, generally centrally between the end portions 72.

The predetermined direction 74 is generally parallel to the longitudinal axis 67.

In the embodiment of Figure 5b, the surfaces 68 face in the predetermined direction 74, providing a direction component 75 generally transverse relative to the axis 67, and a direction component 76 generally parallel to the longitudinal axis 67.

In the embodiment of Figure 5c, the predetermined direction 74 also has components 75 and 76.

In the embodiment of Figure 5d, the predetermined direction 70 is generally parallel to the axis 67.

In the embodiment of Figure 5b, the end portions 72 are enlarged relative to the body 71 and project laterally therefrom.

In the embodiment of Figure 5c, the end portions 72 have grooves 77 providing the surfaces 68 and 69, and therefore the end deformations 61. The grooves 77 also provide for resistance to angular movement between the projections 60.

In the embodiment of Figure 5d, the end deformations 61 are provided by annular flanges 78 that provide the surfaces 68 to 69.

In Figure 6 there is schematically depicted a modification of the splint rod 59. In this embodiment there is provided a splint 80 that is to extend between a pair of adj acent teeth and secured thereby as previously described. In this embodiment, the end portions 72 are provided with apertures 81 that receive the settable substance. In the previous embodiments, the body 71 may be a rod or bar, and may be of circular or other transverse cross-section, while in the embodiment of Figure 6, the body 71 is oval, square or generally rectangular, or may be relatively flat. The substance contained in the apertures 81 provides for resisting relative angular movement between the projections 60 about the axis 67.

With reference to the embodiment of Figure 6, the splint 80 may be applied to the two adjacent teeth 51, and then the mould 53 applied thereafter. The settable substance would then be delivered to the cavities 57.

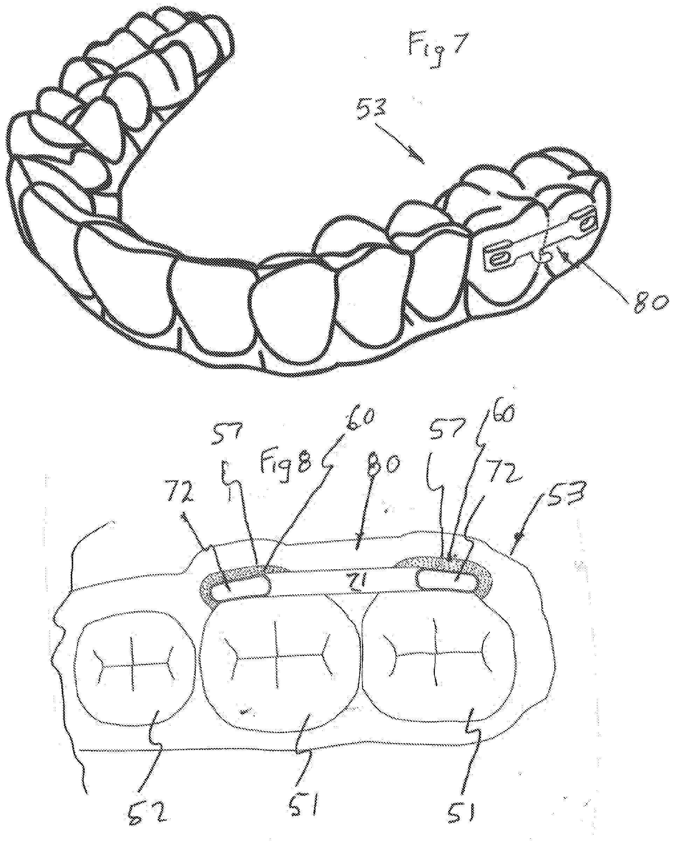

In Figure 7 there is schematically depicted the splint 80, mould 53 applied to teeth (not illustrated) so as to secure the splint 80 in position and therefore provide for the delivery of the settable substance. In this embodiment, the splint 80 may be mounted in the mould 53 and then applied to the teeth, or alternatively the splint 80 may be initially applied to the teeth, and the mould 53 applied thereafter.

Surfaces 68 and 69 border the aperture 81.

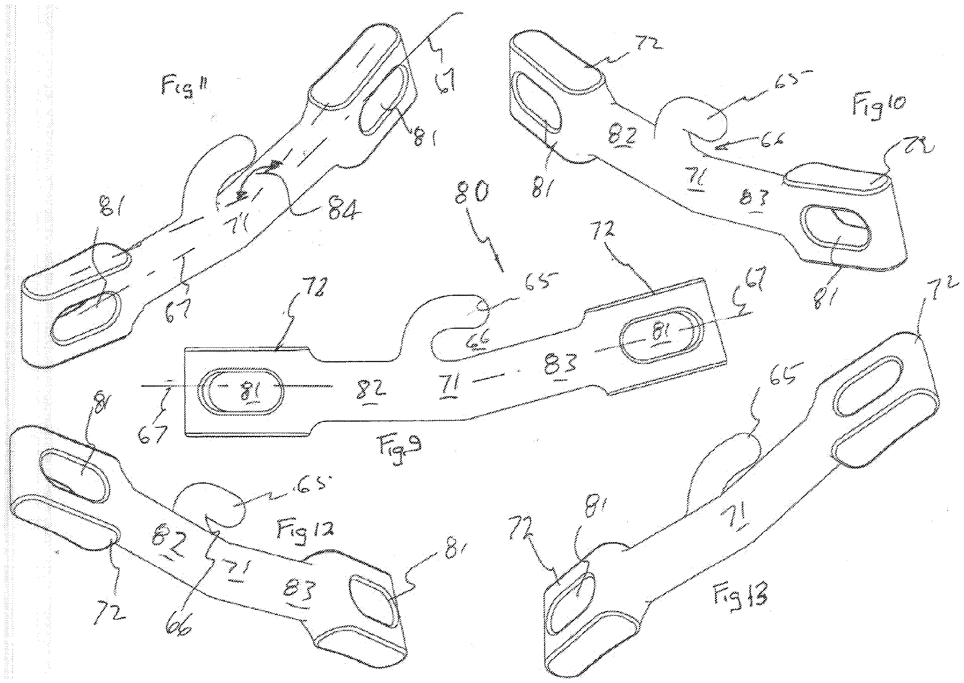

In Figures 9 to 13, there is schematically depicted a modification of the splint 80.

In this embodiment the body 71 includes two portions 82 and 83 that are inclined relative to each other by an acute angle. Additionally, the end portions 72 are generally flat, and are inclined to each other by the angle 84. It should also be appreciated that the end portion 72 may be angularly offset relative to each other about the longitudinal axis 67.

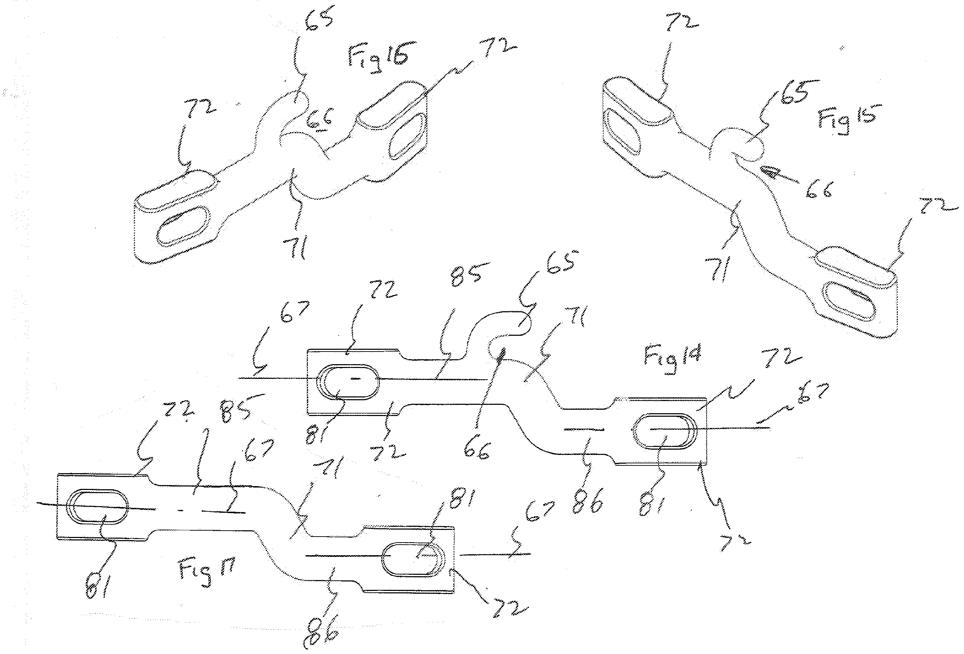

In the embodiment of Figures 14, 15 and 16, the body 71 includes body portions 85 and 86 that are offset so that the end portions 72 are not aligned, that is offset in a direction during transverse of the longitudinal axis 67.

The end portions 72 may layer in a common generally flat plane, or alternatively may be inclined to that plane about the axis 85, and an axis generally perpendicular to the axis 67.

In Figure 17 there is schematically depicted a modification of the embodiment of Figures of 14, 15 and 16. In this embodiment, the projection 65 has been removed.

For orthodontics which is done in a conventional way and is not being dictated to by the needs of cosmetics or rapid treatment, then the above embodiment function as an improved splinting device and has the advantage of not requiring surgery, and enables the operator to splint and fix the molars in a stable position after he has spent the necessary time - typically 12 to 18 months - getting them into the ideal position - the operator can then exert forces on these molars by utilizing them as posterior anchorage units knowing that they are likely to move far less than if there was no anchorage device fitted.

The above embodiment can be created on a 3-D computerised file of a scan of the patient's teeth or conversely the spaces for the composite resin pads and the splinting tube or bar can be manually `waxed up' or created in composite resin on a physical plaster (or other material) model, and the clear plastic attachment tray can be made with conventional laboratory sucked down vacuum forming technology and thus the clear plastic tray can be used to create the matrix for the anchorage device with or without concurrent use of attachments on the other teeth. In this way the proposed invention is versatile as it can be used with existing clear plastic aligners technology, and incorporated [ideally] into the clear plastic attachment template tray - or it can be used with conventional impression and laboratory plaster model and `wax up ` techniques (not using actual wax as it will melt when the hot plastic tray is vacuum formed over it, but using flowable composite typically) and conventional laboratory manufacturing methodology for making a clear plastic tray matrix to achieve the purpose of rigidly splinting the molars and/or premolars.

The above embodiment enables these pads to be formed virtually on 3-D models outside the mouth and to have a clear plastic external template created which is simply pushed against the tooth and the composite resin either light cured or allowed to self cure. This is extremely advantageous in terms of speed and operator comfort and in terms of producing a better quality result. Any flash around the edges can be simply removed with a hand scaler - which is a lot easier than manipulating a high-speed turbine or using a diamond drill rotating at 300,000 revs per minute adjacent to the flexible and unpredictable gum tissue. The gum in this area often has little attached gingiva and if the free gingiva or buccal mucosa - which is somewhat flexible and inclined to move unpredictably into the line of the work - comes into contact with the spinning diamond bur it often wraps around it and causes significant tissue damage. On the lingual side one has the same access problem but instead dealing with the tongue which can be very muscular and uncontrollable. In some patients the tongue is so uncontrollable that it makes working on that side of the tooth almost impossible without a general anaesthetic. Being able to form these posterior composite attachments - whether they be on the buccal or the lingual - utilising low profile, easy access, and premade clear plastic templates that eliminate the need for the dental handpiece is a significant advantage for any orthodontic operator.

The above embodiment does not require these premade metal or ceramic brackets but utilises large bulk pads of strong posterior composite resin or similar material to custom form attachment devices to the tooth that hold the splinting bar or tube to the buccal surfaces or lingual surfaces of the molars or premolars. An advantage of the above embodiment is that they can utilise an existing plastic tray that is made for other purposes such as the creation of attachments to the teeth and can utilise that tray to shape and deliver a splinting bar or tube with attachment areas to the molars or premolars in a more efficient manner and without having to provide additional equipment or devices other than a splinting tube or bar. A further advantage is that the attachment pads or devices and the bar or tube that go between them also fortuitously functions as a conventional attachment which holds the aligner trays down onto the tooth and helps deliver the forces that have been programmed into the aligner.

In respect of the embodiments of Figures 5 to 17, the rod 59 /splint 80 extends between one or more molars together or one molar and one premolar and at the same time provides for the provision of auxiliary elastics to facilitate the closure of gaps and the rotation of teeth and the movement of teeth, and for the provision of class two or class three elastics.

The splint 57, 80 allows teeth that are out of alignment to be fixed in position so as to maximise their anchorage value - and therefore the rod 50/splint 80 has to cope with various angulations that present themselves in orthodontic situations. The above embodiments cope with teeth that are tilted and/or teeth that are vertically raised relative to each other or alternately positioned lingually or buccally. The rod 59/splint 80 can have many different end portions 72 on it so as to lock into and engage the settable material / substance (composite resin). In one preferred embodiment the rod 59/splint 80 has parallel flanges 78 to resist the twisting movement of the rod 59 / splint 80 relative to the surface of the enamel about the axis 67. The rod 59 / splint 80 can be on the buccal surface of the molars and premolars or it can be on the lingual surface or the palatal surface. The rod 59 / splint 80 can be hand positioned on the teeth and glued or fixed in position via means of flowable/settable substance or putty like composite and then the operator can manually trim away the excess. An advantage of the splinting bar being a hollow tube is that an orthodontic wire can be inserted into it to add extra or alternative forces or to treat the teeth with wire based methods as well as or instead of plastic aligners. Such tube can be made strong and tooth coloured using zirconium oxide as one example.

Alternately the rod 59 / splint 80 can be provided by the orthodontic company once it is decided which angulation or offset is the best fit for the existing malalignment of the molars and once that has been established via means of the computerised 3-D alignment program, then the right bar can be selected and provided to the dentist with the splinting tray 53 used to make the projections 60 - these projections 60 can also be formed at the same time as the rod 59 / splint 80 is placed onto the teeth and the attachment tray 53 also creates the composite projections 60 that envelop and engage and fix the ends 72 of the splint 57, 80. This has the advantage of enabling the dentist to simply put the settable substance into the tray 53, insert the splint 57, 80 into and embed it within the tray 53 and then position it over the teeth such that the tray 53 determines the position of the splint 57, 80 to the optimal design set up in the computerised model and also determines the size of the projections 60 of composite that envelop the terminal ends 72 of the rod 59 / splint 80 and it also restricts the flow of the composite so that it doesn't require as much cleaning up or as trimming or sculpting as would normally be required if such composite pad was formed without a shell and made by hand. Such orthodontic rod 59 / splint 80 are designed to resist the forward movement of the teeth and particularly the tilting of the teeth which is caused by the stripping of the enamel. This is often caused by the distalisation of the canines or premolars and with a view to unravelling or realigning the incisors. The splints 57, 80 create a dramatic increase in anchorage and obviate the need to place implants such as temporary anchorage devices, and save precious enamel which may otherwise be lost to the forward mesial tilting of the molars. Although splints have been placed on molars before, these splints do not have hooks such as the projections 65 on them nor do they have bends, nor do they have angulated bends, nor do they have offset bends, nor do they have special lumps or slots or shapes at either end designed to resist the rotation of the bar relative to the buccal or lingual surface of the tooth, nor are they designed to be presented and enveloped within the shell tray for the composite resin attachment lumps and delivered by an attachment tray at the same time as attachments are placed on the other teeth.

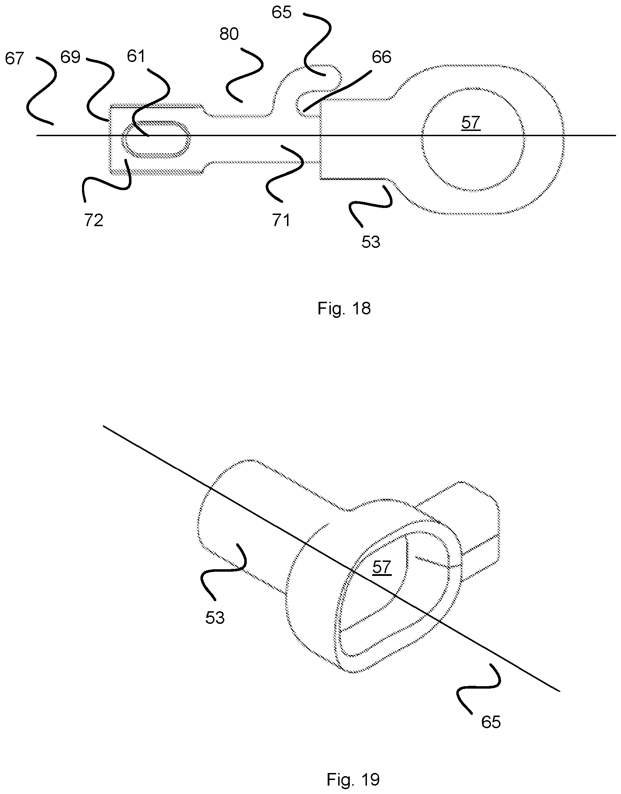

With reference to the embodiment of Figures 18 and 19, the mould 53 provides a single cavity 57. In this embodiment a portion of the cavity 57 of a first mould 53 is filled with the settable substance and a first end portion of the splint 80 is mounted in the mould 53. Further settable substance is then inserted in the cavity so as to embed the splint 80, and the mould 53 is then applied to a single tooth 51. A second mould 53 is then filled with settable substance and applied to an adjacent tooth 51. A second end portion 72 of the splint 80 attached to the first mould 53 can then be inserted into the the cavity 57 of the second mould 53 thus connecting adjacent teeth 51.

The above embodiments also have the advantage of enabling the use of a rod 50 / splint 80 which can be delivered prior to the projection 60 being made prior to any scanning or any impressions of the teeth, the rod 59 / splint 80 can be put onto the teeth by hand and the projections 60 of composite sculpted and the form by hand and then the impression or scan be made and then the trays 53 can be made.

Other advantages include enabling dentists to straighten teeth that are crooked, straighten the molars, and during the middle of the orthodontic treatment, the molars may then be deemed to be straight enough at a certain point and then a rod 59 / splint 80 can be put on to freeze those molars in position and to provide the massive anchorage, without having to compromise on the position of the molars by splinting at the beginning of treatment. Otherwise if the molars are quite crooked, the dentist can correct them first, then put on a straight rod 59 / splint 80 and then proceed to unravel the front teeth and utilise the rod 59 / splint 80 and its anchorage to strip the premolars and strip the canines and to pull the canines back and so create the space in the anterior.

The above embodiment ensures that that opposite reaction which would pull the molars towards the mesial is resisted as much as possible, and that dentists and orthodontists are not adversely influenced by the apparent ease with which computerised programs demonstrate molar anchorage without the physical anchorage device to create such a result.

## Claims

1. An orthodontic splint (59, 80) to be fixed to a pair of adjacent teeth (51) so as to extend therebetween, the splint (59) being longitudinally elongated so as to have a longitudinal axis (67) and longitudinally spaced end portions (72), each end portion being adapted to be attached to a respective one of the teeth (51) by a settable material, and wherein the splint (59) includes an elongated main body (71) extending generally longitudinally parallel to said longitudinal axis (67), wherein the splint (59) is formed of rigid material so as to resist deformation and further includes a projection (65) extending from said body providing for attachment to the splint (59) of a tensioning member such as elastic bands, chain or thread to extend to a further tooth.

2. The orthodontic splint (59, 80) of claim 1, wherein the projection (65) is a hook so as to provide a recess (66) between the hook (65) and the body (71).

3. The orthodontic splint (59, 80) of claim 1 or 2, wherein each end portion (72) includes a surface (68, 69) facing in a predetermined direction (74), said predetermined direction (74) having a direction component (76) parallel to said longitudinal axis (67) so as to be engaged by the settable material when set, and therefore resist relative movement between each end portion (72) and to which each end portion (72) is respectfully attached.

4. The orthodontic splint (59, 80) of any one of claims 1 to 3, wherein the splint (59, 80) is a rod or bar or tube.

5. The orthodontic splint (59, 80) of claim 3, wherein said predetermined direction (74) is generally parallel to said longitudinal axis (67).

6. The orthodontic splint (59, 80) of claim 3, said predetermined direction (74) includes a direction component (75) generally transverse of said axis (67).

7. The orthodontic splint (59, 80) of claim 3, wherein the end portions (72) have grooves (77) providing said surface (68, 69), respectively, and providing for resistance to angular movement.

8. The orthodontic splint (59, 80) of claim 3, wherein the end portions (72), include end deformations (61) provided by annular flanges (78) providing said surface (68, 69), respectively.

9. The orthodontic splint (59, 80) of any one preceding claim, wherein the end portions (72), include apertures (81) that are configured to receive the settable substance.

10. The orthodontic splint (59, 80) of any one preceding claim, wherein the splint is formed of metal wire, fibre glass or ceramic.

11. An assembly comprising an orthodontic splint (59, 80) according to any one of the preceding claims and an orthodontic mould (53) to be applied to one or more of a patient's teeth (51) for the application of the orthodontic splint (59, 80), the mould (53) having:
a first cavity (57) for receiving a first one of said end portions (72) of said splint (59);
a second cavity (57) for receiving the other one of said end portions (72) of said splint (59), wherein each cavity (57) is configured to be positioned adjacent a respective tooth (51) of the patient, with the cavities (57) to receive a settable material to provide a projection (60), each projection (60) to be fixed to a respective one of the teeth (51); and
the orthodontic splint (59) mounted in the mould (53) and extending between the cavities (57) so as to be secured to the projections (60) when the settable material is set.

12. The orthodontic mould (53) of claim 11, wherein the mould (53) is formed of resilient plastics material, so that upon resilient deformation and application, the mould (53) is urged into engagement with the patient's teeth (51).

13. The orthodontic mould (53) of claim 11, wherein the mould (53) has a front wall (54) to be positioned adjacent front surfaces of the patient's teeth (51), and a rear wall (55) to be positioned adjacent rear surfaces of the patient's teeth (51), with the front wall (54) at least partly enclosing the cavities (57).

14. The orthodontic mould (53) of claim 13, the front wall (54) and the rear wall (55) are joined by end walls (56).

15. The orthodontic mould (53) of claim 11, wherein the mould (53) includes a channel (63) extending between the cavities (57), within which the splint (59) is mounted, preferably wherein the splint (59) is snap engaged.

16. The orthodontic mould (53) of claim 11, wherein the end portions (72) of the orthodontic splint (59) are configured to engage the settable material so that the orthodontic splint (59) inhibits relative movement between the settable material projections (60).

## Patentansprüche

1. Ein kieferorthopädischer Splint (59, 80), der an einem Paar benachbarter Zähne (51) so zu befestigen ist, dass er sich dazwischen erstreckt, wobei der Splint (59) länglich so langgestreckt ist, dass er eine Längsachse (67) und länglich beabstandete Endabschnitte (72) aufweist, wobei jeder Endabschnitt so angepasst ist, dass er an einem entsprechenden der Zähne (51) durch ein aushärtbares Material angebracht wird, und wobei der Splint (59) einen langgestreckten Hauptkörper (71) enthält, der sich im allgemeinen längs parallel zu besagter Längsachse (67) erstreckt, wobei der Splint (59) aus einem steifen Material gebildet ist, um einer Verformung zu widerstehen, und ferner einen Vorsprung (65) enthält, der sich von besagtem Körper aus erstreckt und zur Anbringung eines Spannelementes an dem Splint (59) dient, wie elastische Bänder, einer Kette oder eines Fadens, um sich zu einem weiteren Zahn zu erstrecken.

2. Der kieferorthopädische Splint (59, 80) nach Anspruch 1, wobei der Vorsprung (65) ein Haken ist, um eine Aussparung (66) zwischen dem Haken (65) und dem Körper (71) vorzusehen.

3. Der kieferorthopädische Splint (59, 80) nach Anspruch 1 oder 2, wobei jeder Endabschnitt (72) eine Oberfläche (68, 69) aufweist, die in eine vorgegebene Richtung (74) weist, wobei besagte vorgegebene Richtung (74) eine Richtungskomponente (76) parallel zu besagter Längsachse (67) aufweist, um mit dem aushärtbaren Material in Eingriff zu kommen, wenn es ausgehärtet ist, und daher einer relativen Bewegung zwischen jedem Endabschnitt (72) zu widerstehen, und an der jeder Endabschnitt (72) entsprechend angebracht ist.

4. Der kieferorthopädische Splint (59, 80) nach einem der Ansprüche 1 bis 3, wobei der Splint (59, 80) ein Stab oder eine Stange oder ein Rohr ist.

5. Der kieferorthopädische Splint (59, 80) nach Anspruch 3, wobei die vorgegebene Richtung (74) im allgemeinen parallel zu besagter Längsachse (67) verläuft.

6. Der kieferorthopädische Splint (59, 80) nach Anspruch 3, wobei die vorgegebene Richtung (74) eine Richtungskomponente (75) enthält, die im allgemeinen quer zu besagter Achse (67) verläuft.

7. Der kieferorthopädische Splint (59, 80) nach Anspruch 3, wobei die Endabschnitte (72) Nuten (77) aufweisen, die jeweils besagte Oberfläche (68, 69) vorsehen und für einen Widerstand gegen eine Winkelbewegung sorgen.

8. Der kieferorthopädische Splint (59, 80) nach Anspruch 3, bei der die Endabschnitte (72) Endverformungen (61) enthalten, die durch ringförmige Flansche (78) vorgesehen werden, die jeweils besagte Oberfläche (68, 69) vorsehen.

9. Der kieferorthopädische Splint (59, 80) nach irgendeinem der vorhergehenden Ansprüche, wobei die Endabschnitte (72) Öffnungen (81) enthalten, die zur Aufnahme der aushärtbaren Substanz konfiguriert sind.

10. Der kieferorthopädische Splint (59, 80) nach irgendeinem der vorhergehenden Ansprüche, wobei der Splint aus Metalldraht, Glasfaser oder Keramik gebildet ist.

11. Eine Baugruppe, umfassend einen kieferorthopädischen Splint (59, 80) nach irgendeinem der vorhergehenden Ansprüche und eine kieferorthopädischen Form (53), die an einem oder mehreren Zähnen (51) eines Patienten zur Anwendung des kieferorthopädischen Splint (59, 80) anzubringen ist, wobei die Form (53) aufweist:
einen ersten Hohlraum (57) zur Aufnahme eines ersten besagter Endabschnitte (72) besagten Splints (59);
einen zweiten Hohlraum (57) zur Aufnahme des anderen der Endabschnitte (72) besagten Splints (59), wobei jeder Hohlraum (57) so konfiguriert ist, dass er benachbart an einen jeweiligen Zahn (51) des Patienten positioniert wird, wobei die Hohlräume (57) ein aushärtbares Material aufnehmen, um einen Vorsprung (60) vorzusehen, wobei jeder Vorsprung (60) an einem entsprechenden der Zähne (51) zu befestigen ist; und
der kieferorthopädische Splint (59), der in der Form (53) montiert ist und sich zwischen den Hohlräumen (57) erstreckt, sodass er an den Vorsprüngen (60) gesichert wird, wenn das aushärtbare Material ausgehärtet ist.

12. Die kieferorthopädische Form (53) nach Anspruch 11, wobei die Form (53) aus einem elastischen Kunststoffmaterial gebildet ist, so dass die Form (53) bei elastischer Verformung und Anwendung in Eingriff mit den Zähnen (51) des Patienten gezwungen wird.

13. Die kieferorthopädische Form (53) nach Anspruch 11, wobei die Form (53) eine Vorderwand (54) aufweist, die benachbart an die vorderen Flächen der Zähne (51) des Patienten zu positionieren ist, und eine Rückwand (55), die benachbart an die hinteren Flächen der Zähne (51) des Patienten zu positionieren ist, wobei die Vorderwand (54) die Hohlräume (57) zumindest teilweise umschließt.

14. Die kieferorthopädische Form (53) nach Anspruch 13, wobei die Vorderwand (54) und die Rückwand (55) durch Endwände (56) verbunden sind.

15. Die kieferorthopädische Form (53) nach Anspruch 11, wobei die Form (53) einen sich zwischen den Hohlräumen (57) erstreckenden Kanal (63) enthält, in dem der Splint (59) montiert ist, wobei der Splint (59) vorzugsweise durch Schnappen in Eingriff ist.

16. Die kieferorthopädische Form (53) nach Anspruch 11, wobei die Endabschnitte (72) des kieferorthopädischen Splint (59) so konfiguriert sind, dass sie in das aushärtbare Material eingreifen, sodass der kieferorthopädische Splint (59) eine relative Bewegung zwischen den Vorsprüngen (60) des aushärtbaren Materials verhindert.

## Revendications

1. Gouttière (59, 80) orthodontique à fixer à une paire de dents (51) adjacentes afin de s'étendre entre elles, la gouttière (59) étant longitudinalement allongée afin de présenter un axe longitudinal (67) et des portions d'extrémité (72) longitudinalement espacées, chaque portion d'extrémité étant adaptée pour être fixée à l'une respective des dents (51) par un matériau durcissable, et dans laquelle la gouttière (59) inclut un corps principal (71) allongé s'étendant généralement longitudinalement parallèle audit axe longitudinal (67),
dans lequel la gouttière (59) est formée d'un matériau rigide afin de résister à une déformation et inclut en outre une projection (65) s'étendant depuis ledit corps fournissant une fixation à la gouttière (59) d'un élément de mise sous tension tel que des bandes élastiques, une chaîne ou un fil pour s'étendre jusqu'à une dent supplémentaire.

2. Gouttière (59, 80) orthodontique selon la revendication 1, dans laquelle la projection (65) est un crochet afin de fournir un renfoncement (66) entre le crochet (65) et le corps (71).

3. Gouttière (59, 80) orthodontique selon la revendication 1 ou 2, dans laquelle chaque portion d'extrémité (72) inclut une surface (68, 69) faisant face dans un sens prédéterminé (74), ledit sens prédéterminé (74) ayant un composant de direction (76) parallèle audit axe longitudinal (67) afin d'être engagé par le matériau durcissable lorsqu'il est durci, et résistant par conséquent au mouvement relatif entre chaque portion d'extrémité (72) et auquel chaque portion d'extrémité (72) est respectivement fixée.

4. Gouttière (59, 80) orthodontique selon l'une quelconque des revendications 1 à 3, dans laquelle la gouttière (59, 80) est une tige ou une barre ou un tube.

5. Gouttière (59, 80) orthodontique selon la revendication 3, dans laquelle ledit sens prédéterminé (74) est généralement parallèle audit axe longitudinal (67).

6. Gouttière (59, 80) orthodontique selon la revendication 3, ledit sens prédéterminé (74) incluant un composant de direction (75) généralement transversal audit axe (67).

7. Gouttière (59, 80) orthodontique selon la revendication 3, dans laquelle les portions d'extrémité (72) présentent des rainures (77) fournissant ladite surface (68, 69), respectivement, et fournissant une résistance au mouvement angulaire.

8. Gouttière (59, 80) orthodontique selon la revendication 3, dans laquelle les portions d'extrémité (72), incluent des déformations d'extrémité (61) fournies par des collerettes annulaires (78) fournissant ladite surface (68, 69), respectivement.

9. Gouttière (59, 80) orthodontique selon l'une quelconque des revendications précédentes, dans laquelle les portions d'extrémité (72), incluent des ouvertures (81) qui sont configurées pour recevoir la substance durcissable.

10. Gouttière (59, 80) orthodontique selon l'une quelconque des revendications précédentes, dans laquelle la gouttière est formée d'un fil métallique, d'une fibre de verre ou de céramique.

11. Ensemble comprenant une gouttière (59, 80) orthodontique selon l'une quelconque des revendications précédentes et un moule (53) orthodontique à appliquer à une ou plusieurs dents (51) d'un patient pour l'application de la gouttière (59, 80) orthodontique, le moule (53) présentant :
une première cavité (57) pour recevoir une première desdites portions d'extrémité (72) de ladite gouttière (59) ;
une seconde cavité (57) pour recevoir l'autre desdites portions d'extrémité (72) de ladite gouttière (59), dans lequel chaque cavité (57) est configurée pour être positionnée adjacente à une dent (51) respective du patient, avec les cavités (57) pour recevoir un matériau durcissable afin de fournir une projection (60), chaque projection (60) à fixer à l'une respective des dents (51) ; et
la gouttière (59) orthodontique montée dans le moule (53) et s'étendant entre les cavités (57) afin d'être solidement fixée aux projections (60) lorsque le matériau durcissable est durci.

12. Moule (53) orthodontique selon la revendication 11, dans lequel le moule (53) est formé d'une matière plastique résiliente, de sorte qu'à l'issue de la déformation résiliente et de l'application, le moule (53) est poussé en engagement avec les dents (51) du patient.

13. Moule (53) orthodontique selon la revendication 11, dans lequel le moule (53) présente une paroi avant (54) à positionner aux surfaces avant adjacentes des dents (51) du patient, et une paroi arrière (55) à positionner aux surfaces arrière adjacentes des dents (51) du patient, avec la paroi avant (54) enfermant au moins partiellement les cavités (57).

14. Moule (53) orthodontique selon la revendication 13, la paroi avant (54) et la paroi arrière (55) étant jointes par des parois d'extrémité (56).

15. Moule (53) orthodontique selon la revendication 11, dans lequel le moule (53) inclut un canal (63) s'étendant entre les cavités (57), à l'intérieur desquelles la gouttière (59) est montée, préférablement dans lequel la gouttière (59) est engagée par encliquetage.

16. Moule (53) orthodontique selon la revendication 11, dans lequel les portions d'extrémité (72) de la gouttière (59) orthodontique sont configurées pour engager le matériau durcissable de sorte que la gouttière (59) orthodontique inhibe un mouvement relatif entre les projections (60) de matériau durcissable.
